# EUROPEAN PATENT APPLICATION

(11) **EP 1 160 705 A2**
(43) Date of publication of application: **05.12.2001**
(21) Application number: 01112741.2
(22) Date of filing: 25.05.2001
(51) Int. Cl.: G06F 17/60

(54) **Method and system for offering customer information service to specific users utilizing communication network and multi-funcitional communication terminal unit of network-adapted-type for use in same system**

(30) Priority: 26.05.2000 JP 2000157200; 28.09.2000 JP 2000296037; 08.08.2000 JP 2000239745
(71) Applicant: Matsushita Electric Works, Ltd., Kadoma-shi, Osaka-fu 571-8686 (JP)
(72) Inventor: Kasajima, Yasushi, 1048 Oaza-Kadoma , Kadoma-shi , Osaka (JP); Miyanoo, Tetsuji, 1048 Oaza-Kadoma , Kadoma-shi , Osaka (JP); Hieda, Satoru, 1048 Oaza-Kadoma , Kadoma-shi , Osaka (JP)
(74) Representative: VOSSIUS & PARTNER

(57) **Abstract**

A method and system for offering customer information service to specific customers timely over communication network according to the changes in daily living circumstances of the customers staying or living in dwelling house, office building or the like and a multi-functional communication terminal unit of the network-adapted type are disclosed. According to which, monitoring information on living facilities and equipment used in dwelling houses, office buildings or the like is constantly watched by a dwelling management server and the dwelling management server automatically sends the monitoring information to a service server equipped on a communication network immediately when there occurs a change in monitoring information and at specific time intervals when there is no change in monitoring information. The dwelling management server includes communication terminals of the network-adapted type, is two-way communicably connected to communication network and the information communication network connected to the living facilities and equipment in the office buildings, dwelling houses or the like, selects from among different kinds of service information prepared in advance when receiving the monitoring information, and sends back the selected service information to the multi-functional terminal unit as visual displaying information.

## Description

The present invention relates to a customer information service method and system over communication network and a newly developed multi-functional communication terminal unit of the network-adapted type suitable for use in that system. The present invention concerns more particularly to a method and system for offering timely goods, service, other useful information to make daily life comfortable to specific users according to the changes in daily living circumstances from a service server equipped on an outer communication network by building linked network system, as composed of indoor network connected to living facilities and equipment and out communication network system, and a multi-functional communication terminal unit of the network-adapted type suitable for use in that system.

The manufacturers and retailers of household electric appliances, electronic devices or the like periodically render after-sale service to users who have bought their appliances and devices, for example by means of direct mail for introducing new products, or introduction with a telephone.

In recent years, some companies send homes maintenance information, introduction information on new products or the like periodically utilizing the Internet (Web page, electronic mail etc.), but such information from the manufacturer is most one-way communication. Thus, such information is mostly discarded by consumers, especially when they have no problems with their products. Yet on the other hand, it often happens that information, when needed, can not be received quickly.

However, most of consumers wish to receive proper service information at a proper time. Therefore if such service information can be timely offered depending on customer's desire to replace the product now in use or buy a new one, it will be beneficial to both the manufacturers and the consumers.

The manufacturers handling facilities and equipment like household electric appliances, or electronic devices collect information on sales trend at retailers or conduct consumer trend investigation for planning development of new products or sales promotion. Furthermore, the information thus collected is stored in customers' data base and used for market trend investigation as well as for "follow-up" of customers.

However, while information on such as what type of and how many refrigerators were sold can be obtained from retailers, it is impossible to learn quantitative details such as number of times of monthly use and the function about the model types of products.

The questionnaire investigation by consumers can collect some details, however, accurate information on the product can not be obtained either because answers to questions depend on the customer's judgment of subjectivity. Therefore, it would be impossible to obtain accurate information reflecting daily living circumstances of the customers.

Accordingly, it is a first object of the present invention to provide a method and system for timely offering needed information on new products, new services, examination results of a product and other related information through constant watching attribute information, operation information of home appliances, facilities or equipment used daily in home or office buildings or the like about specific customers.

It is a second object of the present invention to provide a system of preparing market trend investigation reports on new products or new service by collecting and sending storing daily use actual result of home appliances and electronic products or other related matter about customers to a center management server equipped on a communication network.

It is a third object of the present invention to provide a new network-adapted type communication terminal unit with a server function which is equipped in customers' dwelling houses, office buildings or the like to offer service information and collect use actual result efficiently and with ease.

In order to achieve first object of the present invention, a method for timely offering customer information service to specific users over communication network according to the changes in daily living circumstances of the customers staying or living in dwelling house, office building or the like is proposed as the present invention, wherein the method comprises of the following steps, namely monitoring at a dwelling management server equipped in the in dwelling house, office building and the like, monitoring information on living facilities and equipment used in the dwelling houses, office buildings or the like, automatically sending immediately from the dwelling management server the monitoring information to a service server equipped on the communication network when there occurs change in monitoring information and sending at specific time intervals the monitoring information to the service server when there is no change in monitoring information, the dwelling management server being connected to a two-way communicable communication network and an information communication network connected to the living facilities and equipment, and receiving at the service server the monitoring information and selecting service information to be supplied in reply to the received monitoring information from among different kinds of service information prepared in advance and sending back the service information to the dwelling management server as visual display information.

And in order to achieve the first object of the present invention, a system characterized by following elements is also provided, wherein the system comprises a dwelling management server for monitoring information on living facilities and equipment used in the dwelling house, office buildings or the like, which is connected to a two-way communication network and a service server equipped on the network for offering the customer information service to the customers through the dwelling management server, wherein the dwelling management server is connected to the communication network to which living facilities and equipment used in the dwelling house are connected, and constantly watches monitoring information on living facilities and equipment connected to the network and sends monitoring information to the service server immediately when there occurs a change in monitoring information and at specific time intervals when there is no change in monitoring information, and wherein the service server selects service information to be supplied in reply to the received monitoring information from among different kinds of service information prepared in advance on receiving the monitoring information, and sends back the service information to the dwelling management server as visual display information.

Further in order to achieve the above second object of the present invention, a system with function of automatically collecting customers' usage data over a communication network and automatically preparing market trend investigation report is provided, wherein the system is characterized in that a center management server with the customer's use actual result is further equipped on the communication network, in that the dwelling management server comprises means for collecting information on use actual results data of living facilities and equipment and sending the information to the center management server, and in that the center management server analyzes the use actual results and stores the analysis results in the use actual result data base, on receiving the usage record data from the dwelling management server, further in that the center service server further comprises means for executing a program prepared in advance to automatically prepare a market trend investigation report in a specific form, referring to use actual results data base as necessary and for sending the report thus prepared to other communication terminals of product manufactures or the like equipped on the communication network.

In the present invention as mentioned above, dwelling management server is easily constituted by using such micro-device as developed using micro-Internet embedded technology as disclosed in USP No. 5,991,795 as an interface device as well as that used in living appliances connected to an indoor information network, thereby enabling the dwelling server to two-way communicably communicate with other communication terminal unit or service servers equipped on a communication network as the Internet.

Also according to such present invention, the object to be watched not only includes representatively dwelling house, office building in which living appliances or facilities are equipped but also living or working spaces in which persons dwell or work, and household electric appliances, communication devices, office appliances factory equipment, security devices for prevention disaster and crime also includes as living appliances, facilities, equipment to which the present invention is applied, according to living or working circumstances of customers.

Still further, in order to achieve the third object of the present invention, amulti-functional communication terminal unit of the network-adapted type is provided, wherein the system comprises a display screen where necessary information is displayed for remote control or two-way communication, means, connected to an indoor network in which control signals are at least transmitted to living facilities and equipment including electric appliances used in a dwelling house, for remote control of living facilities and equipment equipped in indoors and outdoors, and means for two-way communicating with an information network such as the Internet and the indoor communication network, whereby the multi-functional communication terminal unit accesses a specific management server to send specific information on the dwelling house when the attribute information on living facilities and equipment connected to the indoor communication network is renewed, or each time a specific period of time passes, while the multi-functional unit displays on the screen renewed introduction information including advertisement on products and services on receiving it from the specific management server.

In such multi-functional communication terminal unit of the present invention as mentioned above, the controlling of electric in dwelling house can be done as well as the controlling of household appliances equipped in dwelling houses using the same signal line under power supply and information network system and such system can be realized by combining micro-Internet embedded technology as mentioned and power line signal carrier.

Furthermore, in preferred embodiment of the multi-functional communication terminal unit as proposed at same time as the present invention, the unit comprises a request receiving screen for rendering more high added value service to specific customers, through which customers are offered various service such as first-aid, answering telephone number or mail address of specific service provider in reply to customers' requests.

Now, preferred embodiments of the present invention are explained referring to the drawings.

Fig.1 is a schematic diagram showing basic concept of the present invention wherein feeding information network is used.

Fig.2 is a schematic diagram showing basic concept of the alternate embodiment of the present invention wherein indoor communication network is used.

Fig.3 is a screen display sample of the multi-functional network communication terminal.

Fig.4a - Fig.4c show samples of screen displayed on the network-adapted-type multi-functional communication terminal unit wherein Fig.4a is a room control screen, Fig.4b is a notice for circulation and correspondence screen, and Fig.4c is a shopping screen.

Fig.5a and Fig.5b show other samples of screen displayed on the network-adapted-type multi-functional communication terminal unit wherein Fig.5a is a request receiving screen for a management server and Fig.5b is an advice return screen sent from the management server.

Fig.6 is a flow chart showing basic operation of the network-adapted-type multi-functional communication terminal unit.

Fig.7 is a schematic diagram showing an embodiment of house diagnostic information service system according to the present invention.

Fig.8 is a schematic diagram showing another application embodiment of house diagnostic information service system according to the present invention.

Fig.9 is a flow chart showing basic operation of the service server used for the house diagnostic information service system.

Fig.10 shows a sample of operational screen including diagnostic result of the living facilities.

Fig. 11 shows a sample of user information screen for supplying usage record data to an affiliated service provider.

Fig.12 is a schematic diagram showing basic concept of the usage record data colleting system of living facilities according to the present invention.

Fig.13 shows operational flow of user registration in the usage record data colleting system according to the present invention.

Fig.14 shows collecting flow of the usage record data in the usage record data colleting system according to the present invention.

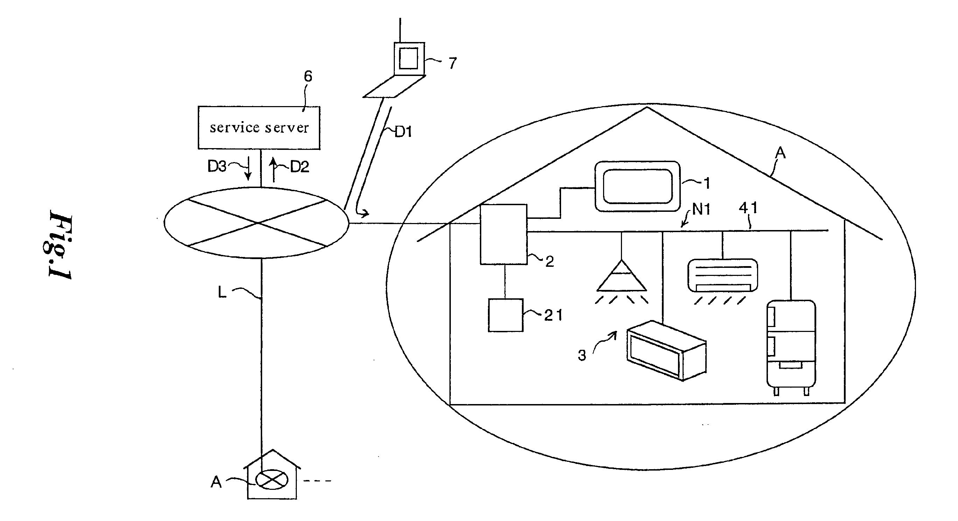

Fig.1 is a schematic diagram showing basic concept of the customer information service system of the present invention.

A dwelling house A is provided with a power information integration panel board 2 from which feeding control lines 41 are led into the dwelling house A , and a multi-functional network communication terminal unit of network-adapted-type 1 is connected to each feeding control line 41 constituting a power supply information network, together with living facilities and equipment 3 such as lighting equipment, an air conditioner, a television, a refrigerator, a washing machine, and so on.

The power information integration panel board 2 is connected to a communication network L represented by the Internet and is able to be connected to a service server 6 equipped on the communication network L.

In this embodiment, the multi-functional communication terminal unit 1 constitutes a dwelling management server and such multi-functional communication terminal unit 1 and the living facilities and equipment 3 incorporate a micro device using micro- Internet embedded technology.

Here such Internet embedded device is a middleware compactly mounting basic software and several software for network and each equipment incorporating such a device can execute two-way information transmission.

Further the multi-functional network communication terminal 1 has a function to remotely control the display screen and the living facilities and equipment 3 and to execute two-way communication by being connected to the Internet L by the device.

Therefore such a system can play a role of remote control supervisory apparatus for remote controlling and supervising the living facilities and equipment 3 and a role of an indoor portal site for displaying external information by connecting with several Web sites. And such a system can search net site, do net banking and do electronic commerce such as net shopping like a normal Internet communication terminal.

Further according to such a system, the power information integration panel board 2 is connected to a power supply and information network N1 and from which the feeding control lines 41 are led and the living facilities 3 are connected to the network N1. So that both power supply and remote control of the living facilities 3 can be achieved by one feeding control line transmission, wherein the power information integration panel board 2 is connected to the power distributing board 21 to which electric power is led through a power line, not shown, from outdoors.

Furthermore, the power information integration panel board 2 can send and receive control signals employing protocol used on the Internet between the living facilities and equipment 3 and also control each living facility 3 utilizing a feed control means developed by a power line carrier technology. Therefore, the living facilities and equipment 3 can be remotely controlled or their operational condition can be monitored from an external communication terminal such as a cellular phone 7 connected via the Internet and from the multi-functional network communication terminal 1.

In the figure, the multi-functional network communication terminal 1 is directly connected to the power information integration panel board 2, however, it may be directly connected to the feeding control line 41. Further in the figure, the power information integration panel board 2 includes function of a distribution board for supplying electricity to a dwelling house, however it may be designed to be additionally connected to an existing distribution board provided in the dwelling house.

Moreover, the feeding information network N1 isn't limited to the example in the figure applied for the facilities 3 in the dwelling house A. It may be applied for indoor communication network without accompanying feed supply, a collective house network, or a neighborhood area network.

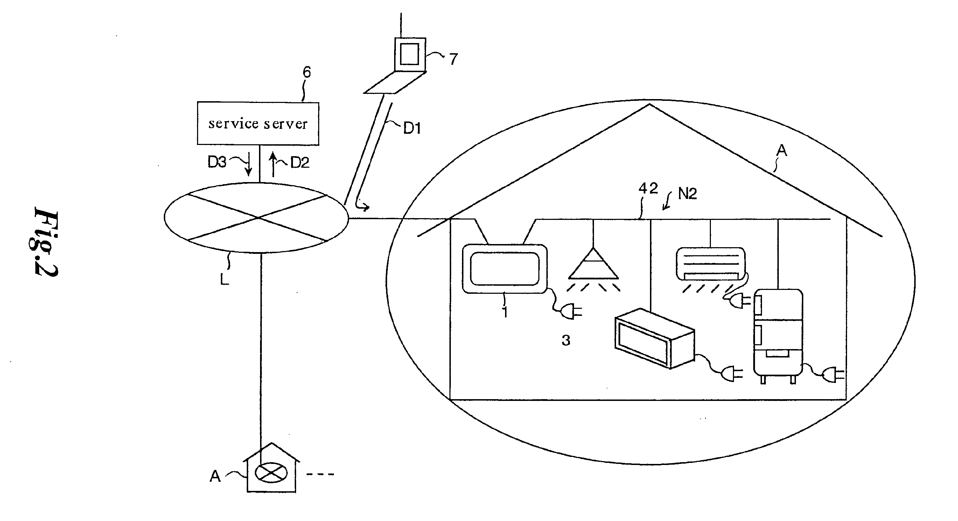

Fig. 2 is a schematic diagram of a system applied for an indoor communication network without having power supply function.

The indoor communication network N2 is constructed such that the multi-functional communication terminal 1, and the living facilities and equipment 3 are connected by a signal line 42. It is the same as in the above-mentioned feeding information network, however, the power information integration panel board 2 isn't connected and electric source is supplied from the distribution board (not shown) via indoor feeding lines (not shown) respectively. For example, electric power is supplied from the outlets provided for the wall in a house.

Such an indoor communication network can remotely control all of the living facilities and equipment 3 in a house by means of the micro-Internet embedded technology, however in case of feeding information network, feeding control can be totally executed together with controlling and monitoring of the facilities 3 by combining power line carrier technology with the built-in micro Internet technology.

Next, service information offered in the systemof the present invention is explained, referring to Fig.1 and Fig.2.

In this method, the multi-functional network communication terminal 1 constantly takes in attribute information on the living facilities and equipment 3 connected to the feeding information network in the dwelling house A. When there occurs change in the information or after a fixed time is passed even when there is no change, specific individual information D2 including their attribute information and living individual information is automatically sent to the specific service server 6.

The service server 6 thus received the specific individual information D2 from the house analyzes the information accumulated for the house, searches a most appropriate advertisement and introduction information D3 corresponding to the goods or service to be recommended to purchase and maintenance introduction information D3 for the living facilities and equipment 3 from data base, and distributes them to the communication terminal 1. The terminal 1 shows the distributed introduction information D3 on its display screen.

Therefore according to such a system, advertisement and introduction information can be timely displayed for the dwelling house every time the attribute information on the using living facilities and equipment 3 is changed so that direct marketing can be effectively achieved.

Further, user can promptly deal with trouble and parts replacement time of the equipment 3 by being supplied with corresponding advertisement and introduction information from the service server 6 equipped on the network. And the service company having the service server 6 can obtain profit margin and advertising fee from the provider supplying advertisement and introduction information.

The living facilities and equipment 3 include communication equipment such as a radio and a television, electrical household appliances including white electrical household appliances such as a washing machine, living accommodation such as an air conditioner and lighting equipment, security equipment such as an electric key, a safety system, and fire system in a dwelling house. It also includes office appliances and plant facilities in a factory or an office.

The attribute information on the living facilities and equipment 3 includes date of manufacturing, model number, product name, basic function, additional function, and present condition. The living individual information includes request information which can be input by a dweller by directly operating the communication terminal 1 and identification information of the dweller except for the attribute information of the living facilities and equipment 3.

On the other hand, the multi-functional network communication terminal 1 has a function of remote controlling the living facilities and equipment 3 by receiving control information D1 from external communication terminals such as the cellular phone 7 and a mobile terminal capable of connecting to the Internet L.

Therefore, the living facilities and equipment 3 can be remotely controlled by operating the communication terminal 1 if a person is in a house or by operating the cellular phone 7 from the place where a person is out of a house.

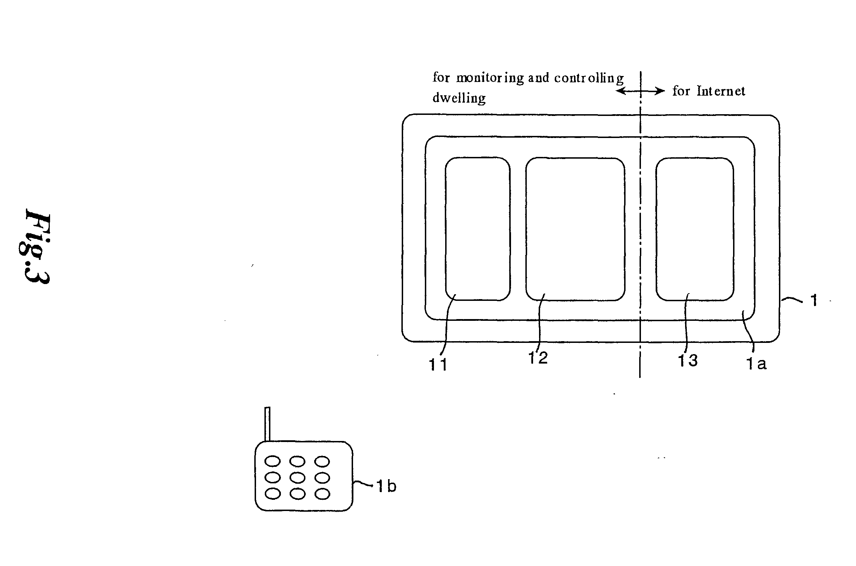

Fig.3 is a screen display sample of the multi-functional network communication terminal.

A display screen 1a of the communication terminal 1 is constructed with a touch panel so as to be operated by touching the screen. And it is possible to control the living facilities and equipment 3 by operating a remote control device 1b. Further it provides a voice guide output function (not shown) for guiding operation by a voice message. In such a case a user can easily operate following the voice message.

As shown in the figure, a remote control screen 11 of the living facilities and equipment 3, domestic correspondence board 12, and the Internet external connection screen 13 can be shown on the display screen 1a.

On the remote control screen 11, outdoor living facilities and equipment 3 can be remotely controlled and their conditions can be monitor displayed. On the domestic correspondence board 12, a message and a destination of the dweller can be input and displayed.

On the Internet external connection screen 13, the Internet L is accessed by operating the screen and two-way communication is made possible, so that net banking or electronic commerce such as virtual mall can be done. Or home page may be searched from the portal screen and electronic mail may be used by booting a communication browser.

As shown in the Fig.3 , the display screen 1a may be divided and each screen 11, 12, 13 may be simultaneously displayed or each screen may be switched by mode selection.

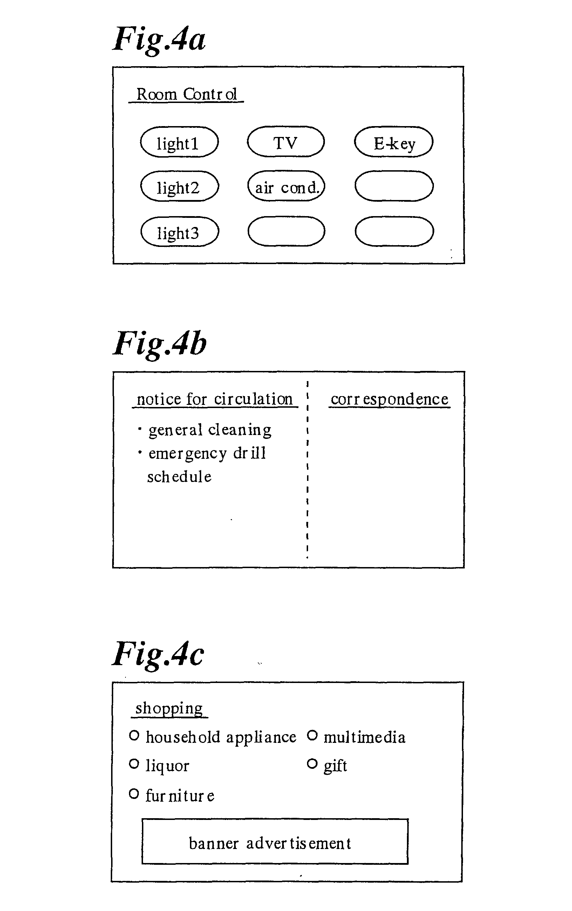

Fig.4a - Fig.4c are samples of display screens on which the above-mentioned mode is shown.

Fig.4a is an operational screen when the communication terminal 1 is used as a remote control device of the living facilities and equipment 3, Fig.4b is a display screen when the terminal 1 is connected to an indoor communication network or the Intranet of neighboring area and is used as a notice for circulation or a correspondence board, and Fig.4c is a display screen of the introduction information D3 distributed from the service server 6 based on the specific individual information D2 sent from the terminal 1.

The display screen of Fig. 4c shows appropriate advertisement or introduction information D3 of the goods and service to be recommended to the dweller in the house A to purchase, the maintenance introduction information D3 of the living facilities and equipment 3 (for example notice that the guarantee period of the electrical household appliance is approached or that extinguishments time has come), and banner advertisement supplied from the provider contracted with the service server management company.

If a door phone handset (not shown) provided at the entrance of a house is connected to the power supply and information network N1 or an indoor communication network N2, the communication terminal 1 can be used as a calling chime or a main interphone for reporting calling from the door phone handset. If a TV interphone function capable of speaking responding to the calling from the door phone handset with a camera (not shown) is incorporated, it can be used as a TV interphone.

The introduction information D3 isn't limited to that shown by Web page and it may be provided by means of electronic mail.

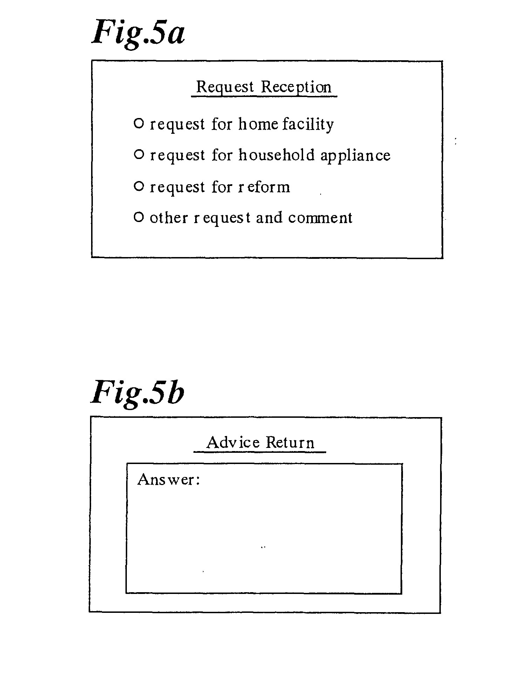

Fig.5a and Fig.5b show other screen samples shown on the multi-functional network communication terminal.

Fig.5a is a request receiving screen for having access to the service server 6. Autonomous demand and inquiry can be received on this screen independent of the living facilities and equipment 3 and corresponding advice can be received from the service server 6 via an advice return screen shown in Fig.5b.

Therefore, when user inputs desired inquiry over such a request screen, the inquiry can be carried to the service server 6 easily and promptly and the service server 6 can return its answer through the advice return screen so that delicate desire from user can be corresponded.

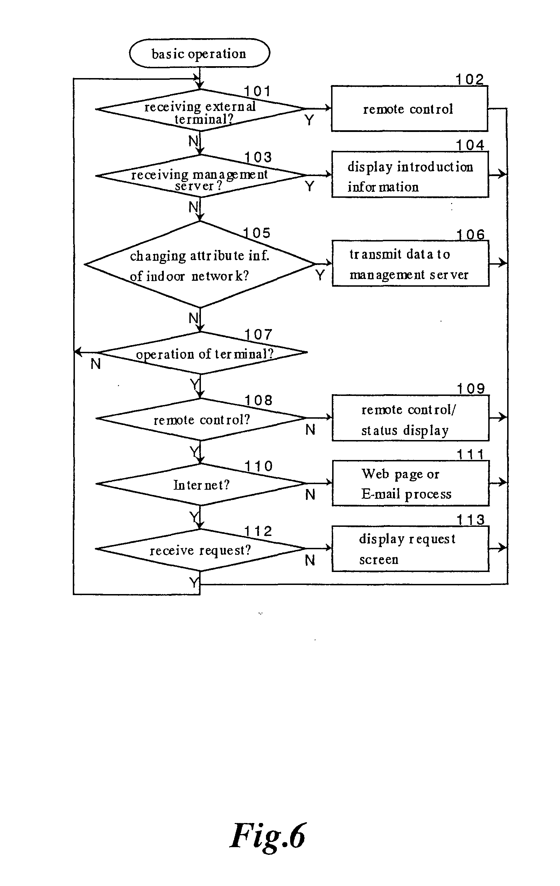

Fig.6 is a flow chart showing basic operation of the multi-functional network communication terminal.

When the communication terminal 1 receives data from a cellular phone 7, it remotely controls the living facilities and equipment 3. When it receives data from the service server 6, it shows introduction information screen and so on. When it detects attribute change of the indoor equipment 3 connected to a power supply and information network N1 or an indoor communication network N2, data is sent to the service server 6 (steps 101 - 106).

In case of operating the communication terminal 1, if it is done by a remote control device, remote control of the equipment 3 and the condition display thereof on the screen are shown. If it is done by the Internet, Web page is shown or electronic mail is processed. If a request is received for the service server 6, request receiving screen is shown (steps 107 - 113).

Therefore, the multi-functional network communication terminal 1 is ranked as a center of the indoor Intranet (indoor communication network or feeding information network). It monitors and controls the facilities and equipment 3 in a house and simultaneously it executes bridging operations such as supplying information to outside and obtaining information from outside.

According to this invention, the service server 6 can monitor the living facilities and equipment and timely distribute most appropriate introduction information, and the communication terminal 1 can display such information. Therefore, user can promptly deal with troubles of the equipment and exchange of consumable goods.

Further, as the service server 6 distributes the advertisement of goods and service that the user surely needs, direct marketing can be executed effectively, contributing increase of advertising income.

Moreover according to the system, the living facilities and equipment 3 can be remotely controlled by the control information transmitted from the external communication terminal via the information communication network, user can turn on an air conditioner shortly before he comes home or can turn off the lighting equipment he forgot to turn off from outside by means of a cellular phone and so on.

Such a system can also be used as correspondence means between family, a notice for circulation and an emergency message display in case of disaster.

Otherwise it can be used as a corresponding board to a concierge in collective housings.

Next other preferable embodiment of the present invention is explained hereafter.

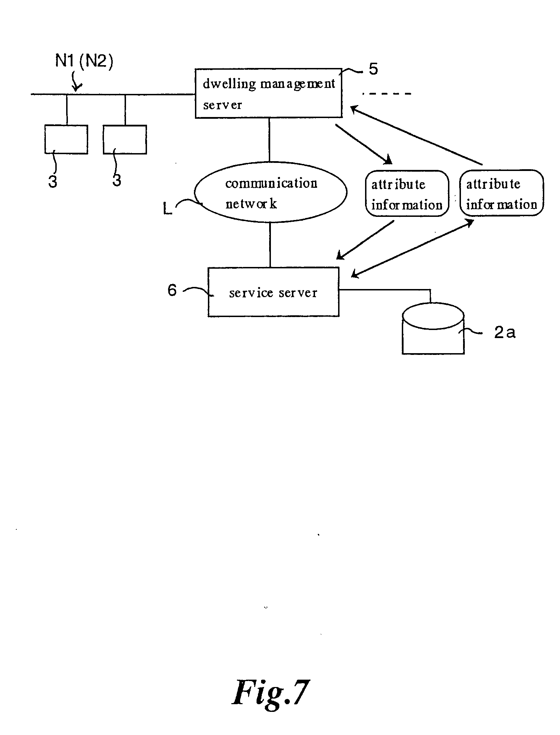

Fig.7 is a schematic diagram for receiving house diagnostic information service system using the communication network.

This system includes a dwelling management server 5 equipped in dwelling and a service server 6, and they are designed to be connectable by a communication network L like the Internet. The dwelling management server 5 may be constructed with the above-mentioned multi-functional communication terminal and dwelling includes house, office, factory, nursing center, department store, and so on.

Living facilities and equipment 3 are connected to the dwelling management server 5 via a power supply and information network N1 or an indoor communication network N2 and includes a communication device adapting built-in micro Internet connection technology so that two-way information transmission to a dwelling service server 1 is made possible.

The dwelling management server 5 can collect attribute information from lighting equipment, electrical household appliances, and other equipment via the network N1 or N2. The attribute information includes date of manufacturing, model number, product name, basic function, additional function, existence of trouble, present operational condition, and so on.

Individual information of dwelling including attribute information is transmitted to the service server 6 at periodic timing such as date or month, at the time of occurrence of trouble, a fixed time after the manufacturing date, or at a timing when user requests by operating the dwelling management server 5. As the dwelling management server 5 can communicate with the equipment 3 via the network N1 or N2, it collects attribute information of the equipment 3 and sends it to the service server 6 periodically by operating an equipment monitoring program at a fixed time interval.

According to this system, the service server 6 notifies the access information of the service companies via the communication network L in order that user can easily order goods and request fixing and inspection. The service server 6 has a user management data base 2a in which location information on contracted dwelling house such as address , telephone number and so on is stored.

The diagnostic result information returned by the service server 6 includes the living facilities and equipment 3 are normal if they are so, or the living facilities and equipment 3 are abnormal and the analyzed result of the abnormality if they are abnormal. It further includes a list in which attribute information sent by the dwelling service server 5 is edited so as to be easily viewable. Advice information includes procedure of inspection and fixing and confirmation method of fixing per equipment.

User repairs by himself or orders replacement parts after receiving such information.

The advice information includes the telephone number and address of the service company affiliated to the service server 6 so that user can immediately get in touch with the service company even if he can't adequately understand the advice.

If the service company connects the communication terminal to the communication network L for supplying service, URL of the Web page set up by the service company and the electronic mail address are included so that it can be accessible via the communication network L.

The living facilities and equipment 3 connected to the dwelling management server 5 includes emergency call system. If user operates the emergency call system, emergency call is transmitted to the service server 6 via the communication network L, then the service server 6 reports to public organs such as the fire station and police station, together with information such as the address and telephone number of the dwelling.

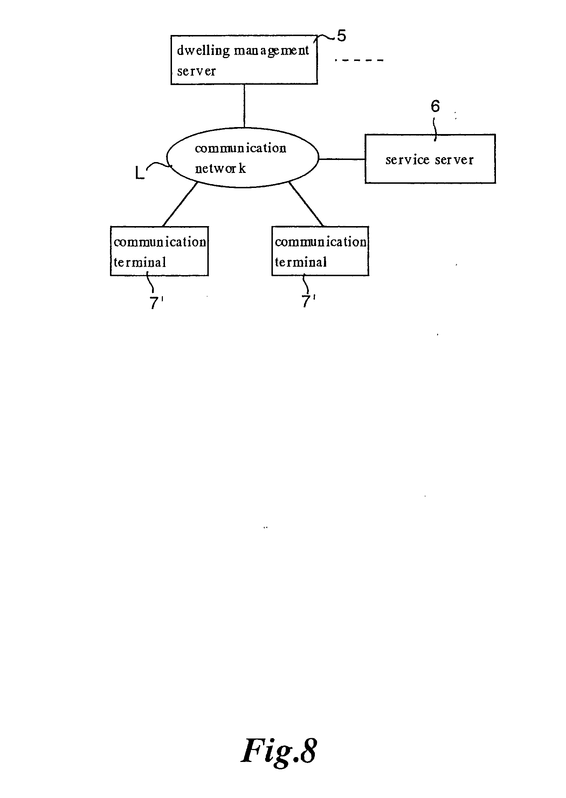

Fig.8 is a schematic diagram of a system wherein the communication terminal 7' of the affiliated service company contracted so as to receive information supply from the service server 6 is connected to the communication network L.

As shown in the figure, the communication terminals 7' of plural affiliated service companies are connected to the communication network L and the communication terminals 7' can be directly accessed by the dwelling management server 5 in this system.

The affiliated service company includes a delivery agent of the living facilities and equipment 3 and their consumables, a repair shop for executing periodical inspection and repairing of the equipment, a leasing company, a convenience store, and so on. Namely, they are companies which can deal with the diagnostic result of the service server 6. The consumables include an electric bulb, a filter for a cleaner, a filter for a ventilating fan, and so on.

According to the communication terminal 7' of the affiliated service company, when the service server 6 is accessed and request of information supply for the equipment on which the service company rendering service is transmitted, such information can be obtained. Or information may be supplied periodically by making a contract.

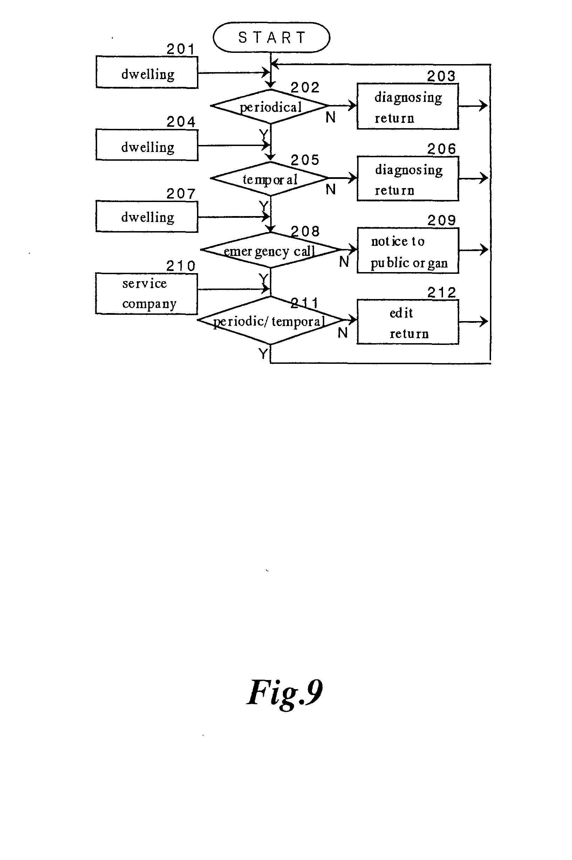

Fig.9 is a flow chart showing basic operation of the service server 6 in the system shown in Fig.8.

When attribute information is received periodically or temporally from the dwelling management server 5, the diagnostic program prepared in the service server 6 in advance is executed, present status of the living facilities and equipment 3 is analyzed, and its diagnostic result and required advice information are returned to the dwelling management server 5 (steps 201 - 206).

The return message such as diagnostic result is displayed on the Web page set up by the service server 6 when user inputs his ID. Or electronic mail may be sent by adding such message.

Here the above-mentioned diagnostic program is automatically booted upon receiving the attribute information and real time diagnosis can be done. However, it may be processed at one time per date, month, or periodically.

When the service server 6 receives an emergency call from the dwelling management server 5, it reports the telephone number and address of the dwelling to the public organ such as the fire department or the police station (207-209).

The service server 6 edits the user information on the equipment on which the service company renders service and returns the edit information to the communication terminal 7' (210-212).

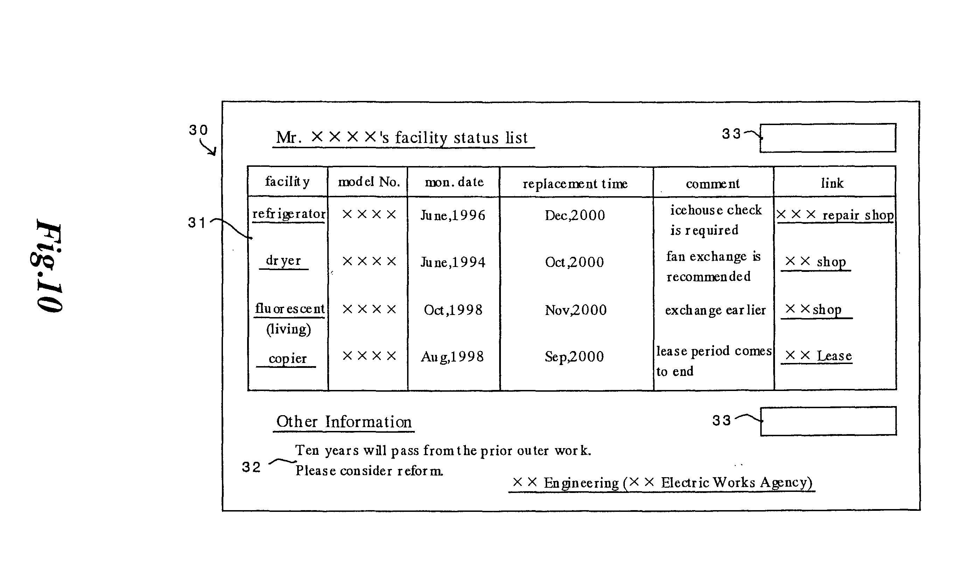

Then, the content of the diagnostic result and advice information to be returned to user is explained referring to Fig.10.

The return information is sent when the dwelling individual information is sent from the dwelling management server 5, when batch processing of the service server 6 is finished, or when retransmission is requested from user ad interim. Then the user can refer to the content on the Web page or electronic mail via the display device of the dwelling service server 1.

Fig.10 shows an operational screen 30 of the dwelling management server 5 displaying the returned information.

The information relating to the living facilities and equipment 3 such as date of manufacturing, maintenance time, comment on inspection, and contact address (link address) are shown in a list on a facility status table 31 on the screen 30. User can obtain information by directly connecting the link address.

As concrete inspection place and replacement member are shown, user can promptly handle. If the facility or consumable which approaches its replacement time is shown in red to call the user' s attention, the user can prevent trouble in advance without leaving the facility as it is. Or when the equipment name is clicked, the screen is switched to its detailed information screen (not shown), live information of the facility is shown among the attribute information transmitted from the dwelling service server 1 so that user can know the trouble place more in detail.

The screen 30 includes other information 32 and banner advertisement 33. For example the other information 32 includes reform information. The condition of the structure of a dwelling house isn't collected by the dwelling service server 1 through the information wire 1b (see Fig.1), however, reform information may be input in the dwelling management server 5 in advance and may be transmitted to the service server 6 together with attribute information.

In this way, user can receive the diagnostic information of the living facilities and equipment 3 only by accessing to the service server 6. Further, as the attribute information of the equipment 3 is stored in the service server 6, it isn't required to store and manage large amount of data in the dwelling management server 5. Further, as its diagnostic result is preferably requested at pleasure, it isn't required to be stored in the dwelling management server 5. As a result, it contributes economizing of a storage medium of the dwelling management server 5.

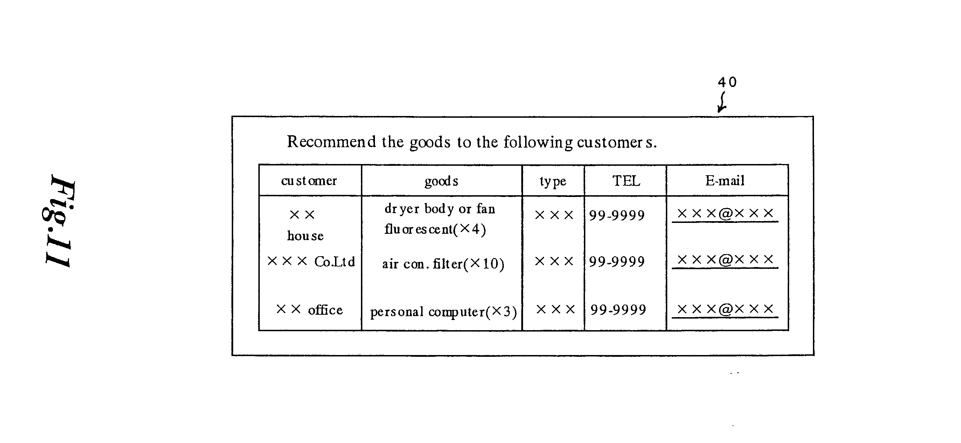

Fig.11 shows information for supplying to the affiliated company from the service server 6.

The content of the information can be referred on the Web page or electronic mail via a display of the communication terminal 7' of the affiliated company. If the affiliated company is a delivery company handling living equipment 3 and its consumable goods, the customers who need the equipment 3 and the consumable goods and their addresses are shown on a screen 40 like the figure.

As those information is obtained by analyzing based on the attribute information of the equipment from the useron the service server 6, the affiliated company can meet customer's accurate needs and can execute successful business operation.

Next, further preferred embodiment according to the present invention is explained referring to the drawing.

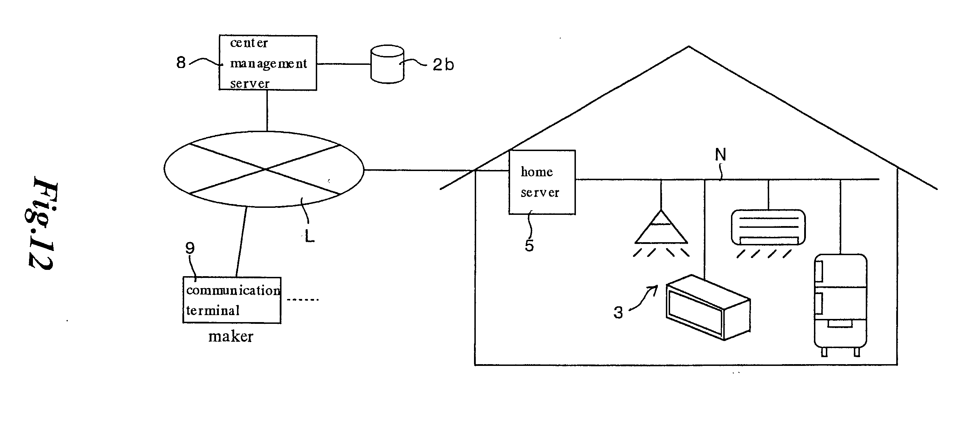

Fig.12 shows construction of customer's use actual result (user record data) collecting system of the living facilities and equipment 3 adapting the communication network.

The dwelling management server 5 comprising a communication terminal 9 such as a personal computer is equipped in a user's house and the living facilities and equipment 3 such as lighting equipment, an air conditioner, a television, a refrigerator and a washing machine are connected to the server 5, thus constructing indoor network N, and such network N may be of course constructed by a power supply and information network N1 or and an indoor information network N2. The user's house includes living circumstances such as a factory and an office in which people live and act other than a home. The living facilities and equipment 3 include electric household appliances, communication appliances, business appliances, plant facilities, security appliances such as safety sensor, fire detection sensor, and human body detection sensor, a call switch (emergency call button), an electric key, meters (metering device) for electricity, gas, water, and so on.

Each living facility 3 is a network-adapted appliance including a micro device developed by using built-in micro Internet technology and is easily connected to the Internet.

The dwelling management server 5 sends and receives control signals of which protocol is used as on the Internet between the living equipment 3 and collets use actual result (usage record data) of the equipment, mentioned later. The dwelling management server 5 may be comprised of the above-mentioned multi-functional communication terminal 1, however, it isn't limited.

The dwelling management server 5 is connected to the communication network L represented by the Internet and is connectable to the center management server 8 equipped on the communication network L and to the communication terminal 9 of each manufacturer supplying the living facilities and equipment 3.

A user data base 2b is provided for the center management server 8 and user individual information to be registered such as name, family structure, age, and sexuality of the user, and the usage record data of the equipment received from each contracted user are stored in advance. For example, the usage record data is accumulated by divided into kinds of network-adapted appliance or each attribute of the user.

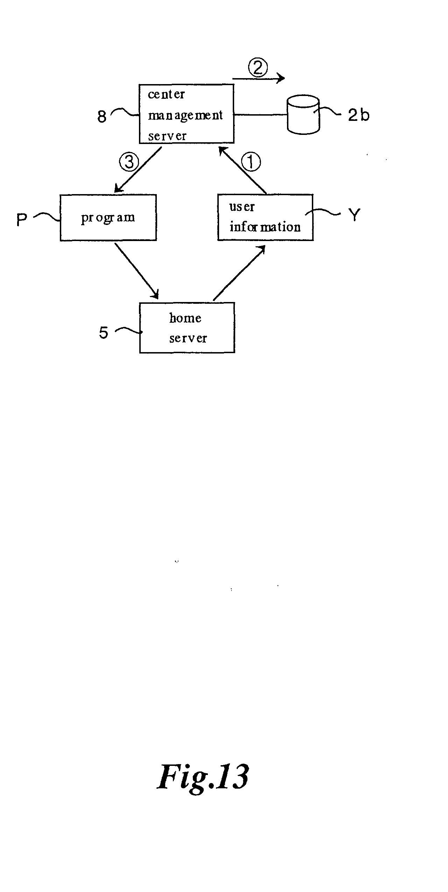

Next, operation of the user registration in the usage record collection system of the living facilities and equipment is explained referring to Fig.13.

User registration is operated like the following online sign-up by the user from his dwelling management server 5 to the center management server 8 of the service company running this system.

The dwelling management server 5 has access to the home page set up by the center management server 8, operates user registration, and transmits input user individual information Y. Here, profile such as name, age, sexuality, family structure of the user and kind of objected network-adapted appliance are input as user individual information.

The center management server 8 registers the received user individual information Y on the user data base 2b and allocates user ID, thereby the user contract procedure is finished.

The center management server 8 transmits a program P for activating the system to the contracted user's dwelling management server 5 and the user downloads and installs the program P into the dwelling management server 5 to be usable.

In this embodiment, user registration by online sign-up and program supplying are executed using communication network as mentioned above, however the present invention isn't limited to such methods. It is preferable that at least user individual information may be registered in a user data base 2b and at least the program P may be installed in the dwelling management server 5. For example, the program P may be delivered through a recording medium such as CD-ROM.

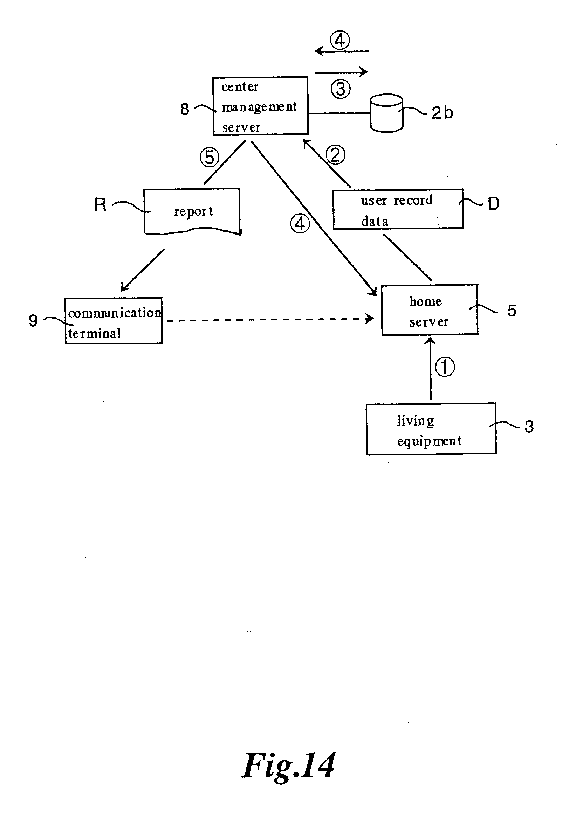

Next, flow of user record data collection in a usage record data collection system of the living facilities and equipment is explained together with Fig.14.

The dwelling management server 5 activates the distributed program P and monitors working condition of the network-adapted appliance 3. Specifically, usage record data D such as start time of using, used period, usage mode are collected each time the appliance is used. In case of cordless electric razor, its usage record data D may be collected each time it is charged, not per actual usage.

The dwelling management server 5 transmits the collected usage record data D of the appliance to the center management sever 8 at a fixed timing such as daily or monthly. Allowance/forbiddance of notification of the usage record data can be set at a time of user registration or at any time by the dwelling management server 5. Only when the contracted user allows to notify the usage record data D, the data D can be transmitted. Or a switch may be provided for the living facilities and equipment 3 so as to set allowance/forbiddance of notification per equipment.

The center management server 8 accumulates the received usage record data D in the user data base 2b. If the network-adapted appliance 3 is rented, rental charge may be calculated by the used time for accounting.

The center management server 8 calculates the timing of requiring consumable goods and maintenance timing per a contracted user by referring and analyzing the user data base 2a fitly so that it supplies timely information to the contracted user.

Further the center management server 8 automatically makes a market research report R referring to the data base 2a at a fixed timing and request from a manufacturer and sends the report R to the communication terminal 7' equipped for the manufacturer contracting with the center management server 8 in advance.

Thus the manufacturer is supplied with the market research report R based on the usage record data D and such report can be effectively used for development of new product, customer exploration, promotion, and so on. The market research report R may include contracted user's personal information using the equipment, in such a case the contracted user may receive several kinds of services directly from the manufacturer.

The service received from the center management server 8 and the manufacturer includes notification of consumed quantity of the appliance (electric power consumption) and exchange time for consumable goods, and point service accumulated by the consumed quantity. For example if the consumed quantity exceeds a fixed amount, consumable goods may be discounted or supplied without payment, or replacement goods may be rented in the event of repairing the goods.

## Claims

1. A method for offering specific customer information service to specific customers timely over communication network according to the changes in daily living circumstances of said customers staying or living in dwelling house, office building or the like, said method comprising of the steps of;
monitoring at a dwelling management server equipped in said dwelling house, office building and the like, monitoring information on living facilities and equipment used in said dwelling houses, office buildings or the like,
automatically sending immediately from said dwelling management server said monitoring information to a service server equipped on said communication network when there occurs change in monitoring information and sending at specific time intervals said monitoring information to said service server when there is no change in monitoring information, said dwelling management server being connected to a two-way communicable communication network and an information communication network connected to said living facilities and equipment, and
receiving at said service server said monitoring information and selecting service information to be supplied in reply to the received monitoring information from among different kinds of service information prepared in advance and sending back said service information to said dwelling management server as visual display information.

2. The method of claim 1, wherein attribute information on living facilities and equipment is sent as said monitoring information from said dwelling management server, and wherein introduction information on products and services prepared in advance corresponding to said attribute information is sent back as said service information from said service server.

3. The method of claim 1,wherein attribute information and operation information on living facilities and equipment is sent as said monitoring information from said dwelling management server, and wherein diagnostic information on results of analysis conducted on the basis of said monitoring information or needed advice information is sent back as said service information from said service server.

4. A system of offering customer information service to specific customers timely over communication network according to the changes in daily living circumstances of said customers staying or living in office buildings, dwelling houses, or the like, said system comprising:
a dwelling management server for monitoring information on living facilities and equipment used in the dwelling house, office buildings or the like, which is connected to a two-way communicable communication network and
a service server equipped on said network for offering said customer information service to said customers through said dwelling management server,
wherein said dwelling management server is connected to said communication network to which living facilities and equipment used in the dwelling house are connected, and constantly watches monitoring information on living facilities and equipment connected to said network and sends monitoring information to said service server immediately when there occurs a change in monitoring information and at specific time intervals when there is no change in monitoring information, and
wherein said service server selects service information to be supplied in reply to the received monitoring information from among different kinds of service information prepared in advance on receiving said monitoring information, and sends back said service information to said dwelling management server as visual display information.

5. The system of claim 4, wherein said dwelling management server sends attribute information on living facilities and equipment as said monitoring information, and receives from said service server introduction information on products and service prepared in advance corresponding to said attribute information as said service information.

6. The system of claim 4, wherein said dwelling management server sends attribute information and operation information on living facilities and equipment as said monitoring information and receives from said service server diagnostic information on results of analysis conducted on the basis of said monitoring information or needed advice information as said service information.

7. The system of claim 4, wherein said dwelling management server is a multi-functional communication terminal unit with function of displaying a request receiving screen on which requests and inquiries from office building or dwelling house occupant is displayed for acceptance of them, and wherein said service server analyzes request information received from said multi-functional communication terminal unit and selects the most appropriate advice information out of different kinds of advice information prepared in advance for said request information and sends the same back to said multi-functional communication terminal unit as visual information.

8. The system of claim 6, wherein said living facilities and equipment include an emergency calling device, wherein said service server further comprises a users' management data base where location information such as addresses, telephone numbers or the like of the dwelling management servers and, wherein said service server reports to public organs such as the fire station and police station, together with information specifying location of the address and telephone number of the office building, dwelling house or the like from which emergency calling signals have been set in, referring to said users' management data base, on receiving said emergency calling signals.

9. The system of any one of claim 4 to claim 7, wherein a center management server with the customer' s use actual result is further equipped on said communication network, wherein said dwelling management server comprises means for collecting use actual result information on living facilities and equipment and sending the information to said center management server, and wherein said center management server analyzes said use actual result and stores the analysis results in said use actual result data base, on receiving said use actual result data from said dwelling management server.

10. The system of claim 9, wherein said center management server further comprises means for executing a program prepared in advance to automatically prepare a market trend investigation report in a specific form, referring to said usage record data base as necessary and for sending said report thus prepared to other communication terminals of product manufactures or the like equipped on said communication network.

11. A multi-functional communication terminal unit of the network-adapted type comprising;
a display screen where necessary information is displayed for remote control or two-way communication,
means, connected to an indoor network in which control signals are at least transmitted to living facilities and equipment including electric appliances used in a dwelling house, for remote control of living facilities and equipment equipped in indoors and outdoors, and
means for two-way communicating with an information network such as the Internet and said indoor communication network,
whereby saidmulti-functionalcommunicationterminalunit accesses a specific management server to send specific information on said dwelling house over said information network when attribute information on living facilities and equipment connected to said indoor communication network is renewed, or each time a specific period of time passes, while said multi-functional unit displays on said screen renewed introduction information including advertisement on products and services on receiving it from said specific management server.

12. A multi-functional communication terminal unit of the network-adapted type comprising;
a display screen where necessary information is displayed for remote control or two-way communication,
means, connected to a power supply and information network from which electric power is supplied and control signals are sent to living facilities and equipment including electric appliances used in a dwelling house, for remote control of living facilities and equipment equipped in indoors and outdoors, and
means for two-way communicating with an power supply and information network and information communication network such as the Internet,
whereby said multi-functional communication terminal unit accesses a specific management server to send specific information on said dwelling house over said information network when attribute information on living facilities and equipment connected to said indoor communication network is renewed, or each time a specific period of time passes, while said multi-functional unit displays the introduction information including advertisement on products and service from said specific control server on receiving said introduction information from said specific management server.

13. The multi-functional communication terminal unit of claim 12, wherein said power supply and information network comprises a power distribution board, connected to information communication network like the Internet and a power information integration panel board supplying electric power within the dwelling house, and wherein said power supply and information network controls electric power and transmits control signals to said living facilities and equipment including electric appliances connected to a feed control line led out from said the power information integration panel board.
